# EUROPÄISCHE PATENTSCHRIFT

(11) **EP 3 286 059 B1**
(45) Veröffentlichungstag und Bekanntmachung des Hinweises auf die Patenterteilung: **27.03.2019**
(21) Anmeldenummer: 16729239.0
(22) Anmeldetag: 09.06.2016
(51) Int. Cl.: B61D 17/02

(54) **SCHIENENFAHRZEUG DES REGIONAL- ODER HOCHGESCHWINDIGKEITSVERKEHRS MIT DACHSEITIGEN AERODYNAMIKELEMENTEN**
RAIL VEHICLE FOR REGIONAL OR HIGH-SPEED TRAFFIC, COMPRISING AERODYNAMIC ELEMENTS ON THE ROOF
VÉHICULE FERROVIAIRE POUR LE TRAFIC RÉGIONAL OU LE TRAFIC À GRANDE VITESSE PRÉSENTANT DES ÉLÉMENTS AÉRODYNAMIQUES CÔTÉ TOIT

(30) Priorität: 30.06.2015 DE 102015212175
(43) Veröffentlichungstag der Anmeldung: 28.02.2018
(73) Patentinhaber: Siemens Mobility GmbH, 81739 München (DE)
(72) Erfinder: KAMMLER, Michael, 47906 Kempen (DE)
(86) Internationale Anmeldenummer: PCT/EP2016/063120
(87) Internationale Veröffentlichungsnummer: WO 2017/001164

(56) Entgegenhaltungen:
- CH-A5- 679 922
- CN-A- 102 717 809
- FR-A1- 2 955 304
- JP-A- H05 328 513

## Beschreibung

Die Erfindung bezieht sich auf ein Schienenfahrzeug des Regional- oder Hochgeschwindigkeitsverkehrs nach dem Oberbegriff von Anspruch 1.

Bekannt ist somit ein Schienenfahrzeug mit Seitenwänden und einem zwischen den Seitenwänden verlaufenden Dach, auf dem Container zur Aufnahme von Funktionsgeräten des Schienenfahrzeugs angebracht sind, wobei das Dach mit seitlichen Aerodynamikelementen ausgestattet ist.

Beispielsweise ist der Regionalzug "SLT 2604" der NS N.V. in der vorgenannten Weise ausgestattet. Dabei kommen als die seitlichen Aerodynamikelemente schürzenförmige Bauteile zum Einsatz, die optisch hochwertig ausgeführt sind. Diese Schürzen sind gesonderte Bauteile, die sich von einer Oberkante einer Seitenwand des Schienenfahrzeugs aus schräg einwärts nach oben erstrecken.

Zwischen den seitlichen Schürzen befindet sich bei solchen Schienenfahrzeugen eine meist ebene Dachfläche, die mit zahlreichen Anschweißteilen oder angepressten C-Schienen bestückt ist. Diese tragen erforderliche Container, Kabelkanäle und auch Schürzenhalter oder auch die Schürzen selbst, welche zur Erfüllung der Aerodynamik- und ggf. auch Designanforderungen erforderlich sind.

Bei dieser bekannten Lösung wird es als nachteilig angesehen, dass die gesonderten schürzenartigen Bauteile sowohl Mehrkosten als auch mehr Gewicht mit sich bringen.

Zudem ist aus der CH 679 922 A5 eine Ausführungsform für eine Lokomotive bekannt, bei der Seitenwände über das Niveau einer Oberseite des Daches hinaus hochgezogen sind. Der Dachbereich dieser Lokomotive weist eine Form eines Troges auf, auf dessen Boden ein Pantograph angeordnet ist.

Die FR 2 955 304 A1 offenbart ein Schienenfahrzeug mit überwiegend geschlossener Dachoberseite. Die Dachoberseite ist mit Montageöffnungen, die beispielsweise mit Hilfe durchsichtiger Deckel geschlossen sind, ausgestattet.

Weiterer technischer Hintergrund ergibt sich aus der JP H05 328513 A und der CN 102 717 809 A.

Ausgehend hiervon liegt der Erfindung die Aufgabe zugrunde, ein Schienenfahrzeug der eingangs genannten Art derart weiterzuentwickeln, dass eine kostengünstigere Realisierung der Aerodynamikelemente erreicht wird.

Diese Aufgabe wird gelöst durch ein Schienenfahrzeug mit den Merkmalen des Anspruchs 1.

Danach ist bei dem eingangs genannten Schienenfahrzeug vorgesehen, dass die Seitenwände über das Niveau einer Oberseite des Daches hinaus derart hochgezogen sind, dass sie als die Aerodynamikelemente wirken und die hochgezogenen Seitenwände von fensterartigen Öffnungen durchbrochen sind, die sich von der Oberseite eines angrenzenden Abschnittes des Daches aus nach oben erstrecken.

Aufgrund der Tatsache, dass die Seitenwände hochgezogen sind, kann sich ein Gewichtsvorteil ergeben, denn die Seitenwände können einen Beitrag zur Steifigkeit des Schienenfahrzeug-Wagenkastens leisten, so dass sie ggf. unterhalb des Dachniveaus mit geringerer Wandungsdicke ausgeführt sein können. Zudem entfallen die im Stand der Technik eingesetzten, gesonderten schürzenartigen Bauteile.

Die Seitenwände können über Längsabschnitte oder eine gesamte Länge des Schienenfahrzeugs hochgezogen sein. Zu welchem Anteil die Seitenwände hochgezogen sind, hängt von den Aerodynamik- oder auch Designanforderungen ab.

Die hochgezogenen Seitenwände sind von fensterartigen Öffnungen durchbrochen, die sich von der Oberseite eines angrenzenden Abschnitts des Daches aus nach oben erstrecken. Die Bemessung dieser fensterartigen Öffnungen richtet sich nach deren Funktion. Ist allein eine Abführung von Wasser von dem Dach des Schienenfahrzeugs angestrebt, reichen relativ niedrige, horizontal verlaufende, schlitzförmige Öffnungen. Soll auch eine Zugänglichkeit für Montagearbeiten an auf dem Dach angeordneten Containern ermöglicht sein, ergibt sich eine größere Bemessung der Öffnungen, insbesondere nach oben. Gleiches gilt für den Fall, dass die Öffnungen die Aufgabe haben, für auf dem Dach angeordnete Kühler und Klimatisierungseinheiten die Zuführung von Zuluft zu ermöglichen.

von Verschraubungen, endseitige Befestigungsabschnitte 6 der Container 1 zu fixieren.

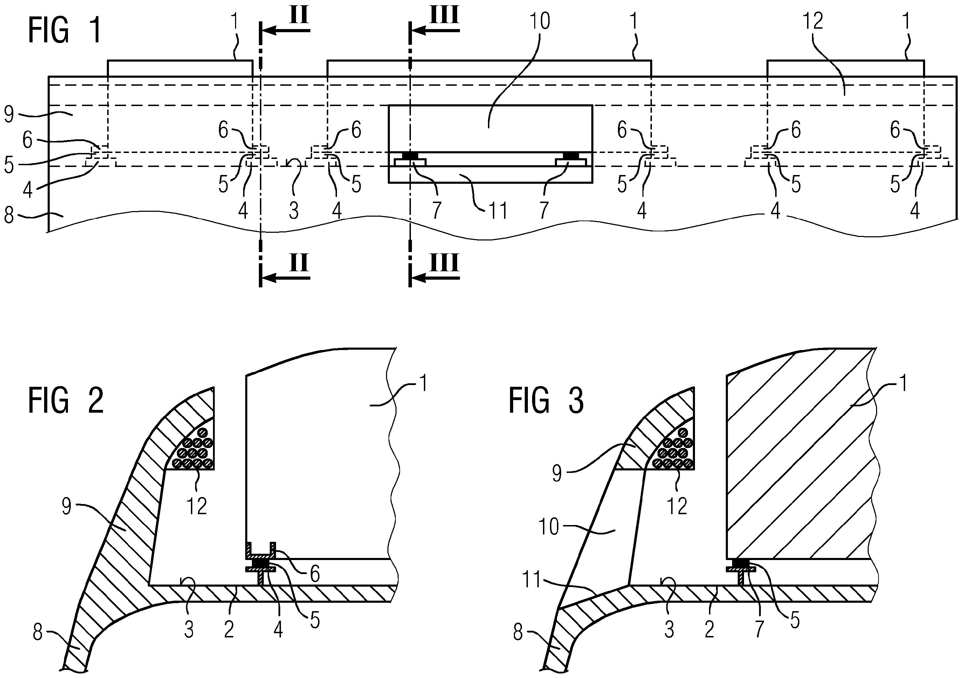

In Figur 1 sind dabei beispielhaft drei Container 1 dargestellt, von denen der mittlere zusätzliche Abstützungen 7 aufweist, die einwärts der endseitigen Abstützelemente 4 angeordnet sind.

Wie insbesondere den Figuren 2 und 3 entnehmbar ist, ist eine Seitenwand 8 des Schienenfahrzeugs zur Ausbildung eines obersten Seitenwandabschnitts 9 derart hochgezogen, dass sie als Aerodynamik- und/oder Designelement wirkt. Es ist insbesondere ersichtlich, dass sich die Seitenwand 8 über das Niveau der Oberseite 3 des Daches 2 hinaus nach oben erstreckt, und zwar in dem Maße, dass sich an der betreffenden Seite des Daches 2 eine aerodynamische Verkleidung für den Container 1 ergibt. Die Seitenwand 8 umfasst somit den strukturell mit der übrigen Seitenwand einheitlich (z. B. weiteres angeschweißtes horizontales Strangpreßprofil bei aus horizontalen Strangpreßprofilen hergestellter Seitenwand) ausgeführten, hochgezogenen Abschnitt 9, der oberhalb der Oberseite 3 des Daches 2 liegt.

Wie sich aus Figur 1 ergibt, ist der hochgezogene Abschnitt 9 der Seitenwand 8 von einer fensterartigen, in diesem Ausführungsbeispiel rechtwinkeligen Öffnung 10 durchbrochen. Dabei schließt, wie aus Figur 3 hervorgeht, die Öffnung 10 auf ihrer Innenseite unten mit der Oberseite 3 des Daches 2 ab. Ein Boden 11 der Öffnungen 10 verläuft, bezogen auf das Schienenfahrzeug, von innen nach außen schräg abwärts, so dass auf dem Dach 2 gesammeltes Wasser wirksam abgeführt werden kann. Dies erhöht die Korrosionsbeständigkeit z. B. der Abstützelemente 4 fü eine Befestigungen der Container 1 auf dem Dach 2.

Zudem ist, wie sich aus Figur 1 ergibt, die Öffnung 10 derart dimensioniert, dass auch Montagearbeiten an den Abstützungen 7 durch die Öffnung 10 hindurch ermöglicht sind.

Wie in den Figuren 2 und 3 veranschaulicht ist, verläuft auf einer Innenseite des hochgezogenen Abschnitts 9 der Seitenwand 8 oberhalb der fensterartigen Öffnung 10 ein mit Kabeln geeignet vorkonfektionierten Kabelkanal 12, der sich längs des Schienenfahrzeugs erstreckt, ggf. über dessen gesamte Länge. Die Anordnung des Kabelkanals 12 ist somit derart gewählt, dass eine Ableitung von Wasser nicht behindert wird.

Es versteht sich, dass längs des Schienenfahrzeugs weitere fensterartige Öffnungen vorgesehen sein können, die funktionsgleich oder -ähnlich mit der erläuterten fensterartigen Öffnung 10 sind und mit dieser fluchten. Auch können weitere Container auf dem Dach 2 angebracht sein.

Die vorstehenden Erläuterungen gelten sinngemäß für die zwei Seitenwände des Schienenfahrzeugs gleichermaßen.

## Patentansprüche

1. Schienenfahrzeug des Regional- oder Hochgeschwindigkeitsverkehrs, mit Seitenwänden (8) und einem zwischen den Seitenwänden (8) verlaufenden Dach (2), auf dem Container (1) zur Aufnahme von Funktionsgeräten des Schienenfahrzeugs angebracht sind, wobei das Dach (2) mit seitlichen Aerodynamikelementen ausgetattet ist, wobei die Seitenwände (8) über das Niveau einer Oberseite (3) des Daches (2) hinaus derart hochgezogen sind, dass sie als die Aerodynamikelemente wirken und die hochgezogenen Seitenwände (8) von fensterartigen Öffnungen (10) durchbrochen sind, die sich von der Oberseite (3) eines angrenzenden Abschnittes des Daches (2) aus nach oben erstrecken.

2. Schienenfahrzeug nach Anspruch 1,
**dadurch gekennzeichnet, dass**
die Seitenwände (8) über Längenabschnitte oder eine gesamte Länge des Schienenfahrzeugs hochgezogen sind.

3. Schienenfahrzeug nach Anspruch 1 oder 2,
**dadurch gekennzeichnet, dass**
ein jeweiliger Boden (12) der fensterartigen Öffnungen (10), bezogen auf das Schienenfahrzeug, von innen nach außen schräg abwärts verläuft.

4. Schienenfahrzeug nach einem der Ansprüche 1 bis 3,
**dadurch gekennzeichnet, dass**
an einer jeweiligen Innenseite der hochgezogenen Seitenwände (8) oberhalb der fensterartigen Öffnungen (10) Kabelkanäle (12) angeordnet sind.

5. Schienenfahrzeug nach Anspruch 4,
**dadurch gekennzeichnet, dass**
die Kabelkanäle (12) durchgehend über eine gesamte Länge des Schienenfahrzeugs verlaufen.

6. Schienenfahrzeug nach einem der Ansprüche 4 oder 5,
**dadurch gekennzeichnet, dass**
die Kabelkanäle (12) mit Kabeln vorkonfektioniert sind.

## Claims

1. Rail vehicle for regional or high-speed transportation, having side walls (8) and a roof (2) which extends between the side walls (8) and on which containers (1) for accommodating functional equipment of the rail vehicle are mounted, wherein the roof (2) is equipped with lateral aerodynamic elements,
wherein
the side walls (8) are raised beyond the level of an upper side (3) of the roof (2) in such a way that they act as the aerodynamic elements, and the raised side walls (8) have window-like openings (10) passing through them which extend upwardly from the upper side (3) of an adjacent portion of the roof (2).

2. Rail vehicle according to Claim 1,
**characterized in that**
the side walls (8) are raised over length portions or an entire length of the rail vehicle.

3. Rail vehicle according to Claim 1 or 2,
**characterized in that**
a respective bottom (12) of the window-like openings (10) extends, with respect to the rail vehicle, obliquely downwards from inside to outside.

4. Rail vehicle according to one of Claims 1 to 3,
**characterized in that**
cable ducts (12) are arranged on a respective inner side of the raised side walls (8) above the window-like openings (10).

5. Rail vehicle according to Claim 4,
**characterized in that**
the cable ducts (12) extend continuously over an entire length of the rail vehicle.

6. Rail vehicle according to either of Claims 4 and 5,
**characterized in that**
the cable ducts (12) are prefabricated with cables.

## Revendications

1. Véhicule ferroviaire pour le trafic régional ou le trafic à grande vitesse, comprenant des parois (8) latérales et un toit (2), qui s'étend entre les parois (8) latérales et sur lequel sont mis des conteneurs (1) de réception d'appareils fonctionnels du véhicule ferroviaire, le toit (2) étant équipé d'éléments aérodynamiques latéraux,
dans lequel
les parois (8) latérales sont surélevées au-delà du niveau d'un côté (3) supérieur du toit (2), de manière à servir d'éléments aérodynamiques et les parois (8) latérales surélevées sont interrompues par des baies (10) de type fenêtre, qui s'étendent du côté (3) supérieur d'une partie voisine du toit (2) vers le haut.

2. Véhicule ferroviaire suivant la revendication 1,
**caractérisé en ce que**
les parois (8) latérales sont surélevées sur des tronçons de longueur ou sur toute la longueur du véhicule ferroviaire.

3. Véhicule ferroviaire suivant la revendication 1 ou 2,
**caractérisé en ce que**
un fond (12) des baies (10) de type fenêtre s'étend, rapporté au véhicule ferroviaire, de manière inclinée de l'intérieur vers l'extérieur vers le bas.

4. Véhicule ferroviaire suivant l'une des revendications 1 à 3,
**caractérisé en ce que**
sur une face intérieure des parois (8) latérales surélevées, des canalisations (12) pour des câbles sont disposées au-dessus des baies (10) de type fenêtre.

5. Véhicule ferroviaire suivant la revendication 4,
**caractérisé en ce que**
les canalisations (12) pour des câbles s'étendent d'une manière continue sur toute une longueur du véhicule ferroviaire.

6. Véhicule ferroviaire suivant la revendication 4 ou 5,
**caractérisé en ce que**
les canalisations (12) pour des câbles sont pré-équipés de câbles.
